# EUROPEAN PATENT SPECIFICATION

(11) **EP 3 026 643 B1**
(45) Date of publication and mention of the grant of the patent: **18.04.2018**
(21) Application number: 15382030.3
(22) Date of filing: 02.02.2015
(51) Int. Cl.: G07C 9/00, A45C 13/00, H04W 4/02, A45D 33/00, A45C 5/00, A45C 11/00

(54) **SYSTEM FOR SECURELY TRANSPORTING AND HOUSING COSMETICS**
SYSTEM ZUM SICHEREN TRANSPORT UND AUFNEHMEN VON KOSMETIKA
SYSTÈME SÉCURISÉ DE TRANSPORT ET DE STOCKAGE DE PRODUITS COSMÉTIQUES

(30) Priority: 24.11.2014 ES 201431733 P
(43) Date of publication of application: 01.06.2016
(73) Proprietor: Torquemada Jiménez, Antonio Daniel, 28510 Campo Real (ES)
(72) Inventor: Torquemada Jiménez, Antonio Daniel, 28510 Campo Real (ES)
(74) Representative: González López-Menchero, Álvaro Luis

(56) References cited:
- CN-U- 203 168 296
- DE-U1- 29 500 497
- US-A1- 2008 295 300
- US-A1- 2011 186 397
- US-A1- 2012 279 875
- DELSEY: "DELSEY PLUGGAGE", , 18 November 2014 (2014-11-18), page 1, XP054976472, Retrieved from the Internet: URL:https://www.youtube.com/watch?v=-_qg53 3sZqE [retrieved on 2016-04-15]
- Bluesmart: "Bluesmart - The World's First Smart Connected Carry-on Suitcase", , 20 October 2014 (2014-10-20), page 1, XP054976480, Retrieved from the Internet: URL:https://www.youtube.com/watch?v=VJnvx7 IhAmk [retrieved on 2016-04-15]

## Description

### OBJECT OF THE INVENTION

The object of the present invention is, as established in the invention title, a system for securely transporting and housing cosmetics that seeks to avoid the theft of the cosmetics housed in a box at home or in hotels. The system comprises a box, where products such as cosmetics and similar may be housed and transported, and a smartphone that enables users to be registered and de-registered and even opening remotely at close range.

The present invention is characterised by the special technical features of the elements that form part of the system in such a way that, in combination and acting synergistically, they give rise to an effective, simple security system that is easy to handle and build.

Therefore, the present invention falls within the field of secure closing systems, as well as within the field of packaging used for transporting cosmetics and similar.

### BACKGROUND OF THE INVENTION

There are safes known in the state of the art that have one security compartment that have been conceived so that they are very difficult for unauthorised people to open and thus be able to keep objects of value.

In general, they are made of an extremely resistant metal; they tend to be very heavy and consist of a closing system that may only be opened via secret codes, and these codes may be changed in order to further maintain security. A less secure version (only suitable for petty cash) is called a money safe.

In other cases, when security on suitcases and other accessories is required, closures with keys are provided, either via padlocks or closures with a mechanical combination code. Although they are systems that fulfil the purpose sought, they have drawbacks that could be improved, such as for example, the fact that a key must be connected in order to be able to open the suitcase or container; the long period of time required to carry out the opening and closing operation; and requiring actions in the closing element in order for closure to be carried out. Moreover, the opening of the box would be restricted to the key holders, which may only be just one person, with the inconveniences that this entails. Furthermore, there is a certain risk of losing the key and in the case of the combination code there is the risk of the code being obtained as a result of repeated combination attempts (given the small number of possible combinations).

The so-called smart luggages are also well known in the art and disclose a system according to the preamble of claim 1. Therefore, the object of the present invention is to develop a system for securely transporting and housing products such as cosmetics, which overcomes the aforementioned drawbacks, thus developing a system such as the one described below and the essential nature of which is reflected in the first claim.

### DESCRIPTION OF THE INVENTION

The object of the present invention is a system for securely housing and transporting cosmetics according to claim 1. The cosmetics container or box is a box made out of high-resistance insulating material equipped with a mechanism for accessing the inside, and opening and closing means.

The means for accessing the inside in the rigid case embodiment is a hinged lid and in the flexible bag embodiment it is a zip.

The opening and closing means comprise:
- An electromechanical lock
- An electronic control for opening and closing
- User identification means via fingerprints
- At least one opening and closing detection sensor
- A mechanical mechanism that enables automatic locking by merely closing the box without requiring any additional action
- An electronic registering mechanism of opening and alarm events
- Wireless communication means, for example via electromagnetic signals or via Bluetooth.
- Power supply means, which is preferably via batteries or cells
- Indication means of the operations carried out, said indication means potentially being via a light or acoustic signal.

With the aim of improving the state of the products housed inside the container or box, in a manner that is complementary to the system, the container or box is provided with cooling means, carried out via thermoelectric cooling that uses the Peltier effect to create a thermal flow through the joining of two different materials, such as metals or P-and N-type semiconductors, with the aim of controlling the inside temperature of the box and preventing the temperature from rising above a programmable threshold.

The smartphone is equipped with an application that enables opening and closing remotely at close range, as well as being able to register and de-register users, and an alarm configuration based on the inside temperature of the container or box, and configuring the electronic opening and alarm register, and reviewing the events registered (in the event that the storage thereof has been configured).

Due to the features that the system is equipped with and the collective and interactive arrangement thereof, a variety of effects are achieved simultaneously: on the one hand, the secure transport and housing of products, such as cosmetics and similar, where the free availability thereof is not reduced to a single user, but rather several users may be registered, where in addition the opening and closing is not carried out on the basis of keys, but rather depending on the user's fingerprints, remote opening and closing being possible.

### EXPLANATION OF THE FIGURES

As a complement to the present description, and for the purpose of helping to make the characteristics of the invention more readily understandable, in accordance with a preferred practical exemplary embodiment thereof, said description is accompanied by a set of drawings constituting an integral part of the same, which by way of illustration and not limitation represent the following.
In figure 1, a general representation of the system for transporting and housing cosmetics, object of the invention, may be seen.

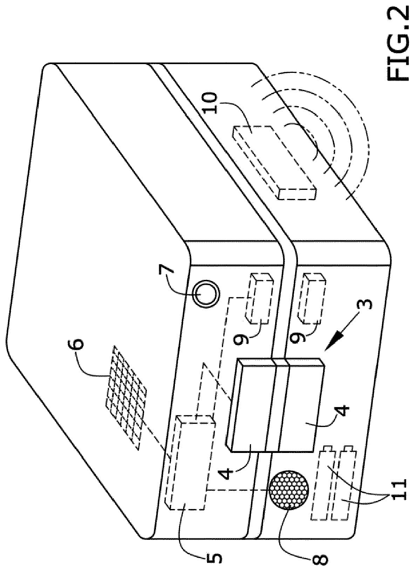

In figure 2, a possible embodiment of the opening and closing element may be seen in a simplified manner, where the different elements that provide the different features may be seen.
Figures 3 and 4 show a possible embodiment in which the container or box is a rigid case.
Figures 4 and 5 show a possible embodiment in which the container or box is a flexible bag that is accessed by means of a zip.

### PREFERRED EMBODIMENT OF THE INVENTION

With reference to the figures, a preferred embodiment of the invention proposed is described below.

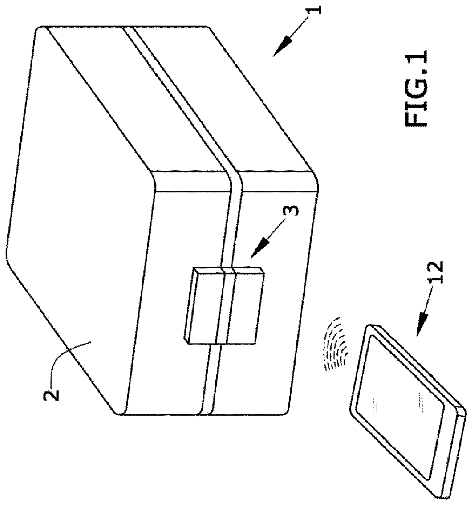

In figure 1 it may be seen that the system for transporting and housing cosmetics and similar comprises:
- a container or box (1) provided with means for accessing the inside, which in the case represented is a hinged lid (2), and means for opening and closing (3) the container or box (1)
- a smartphone (12) that may send and receive information to and from the container or box (1).

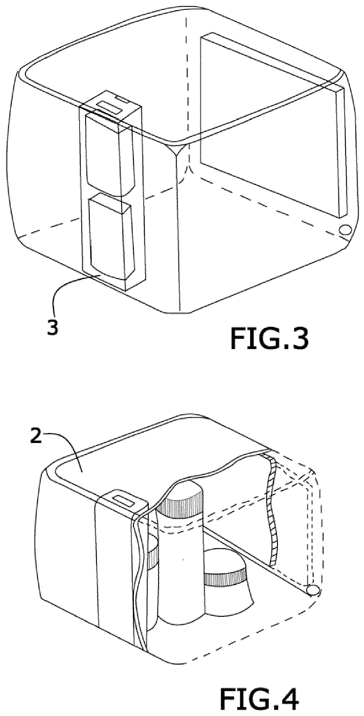

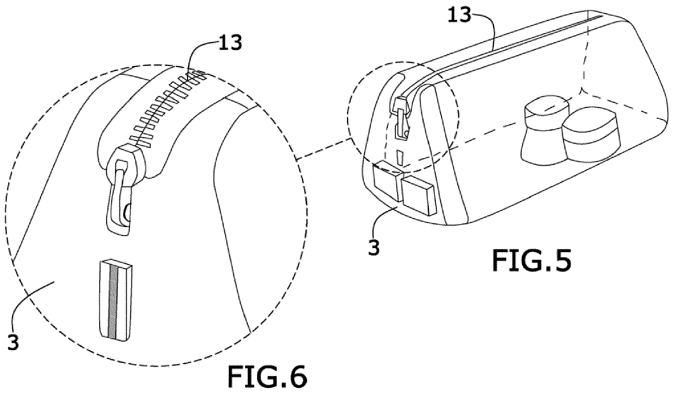

The container or box (1) may have different designs; in one possible embodiment it may be a rigid case, such as the one shown in figures 3 and 4, or a flexible bag, such as the one shown in figures 5 and 6.

The means for accessing the inside, in the case of being a rigid case, are a lid (2), while in the case of being a flexible bag, they are a zip (13) or similar.

The opening and closing means comprise:
- an electromechanical lock (4), which in a possible embodiment may be motorised.
- an electronic control (5) for opening and closing
- at least one biometric reader (6), preferably for fingerprints
- signalling means of the operations carried out, which may be light (7) or acoustic means such as a buzzer (8)
- an opening and closing detection sensor (9)
- wireless communication means (10), to be able to connect with the smartphone (12) via Bluetooth for example
- power supply means, which may be a number of batteries (11)
- a mechanical mechanism that enables automatic locking by merely closing the box without requiring any additional action.

The electronic control is responsible for receiving information from the at least biometric sensor via fingerprints, from the opening and locking sensor, and from the wireless communication means. Furthermore, it is responsible for governing the operation of the different elements that are activated and deactivated, such as the activation of the electromechanical lock, the activation and shut-down of the visual and acoustic signalling means and sending information to the mobile phone.

The representation of the arrangement of the elements that form part of the opening and closing means do not have to be limited to the shape represented, potentially being of any shape that serves the purpose proposed.

Figures 3 and 4 show a rigid case as an embodiment of the container or box in which the details of the opening and closing means may be seen, based on blocking and freeing the pull tab of the opening and closing of a zip.

Firstly, the start-up system thereof must be configured, the application having to be first downloaded onto the smartphone, then the phone must be paired with the container or box in order to then register the different users.

## Claims

1. A system for transporting and housing cosmetics comprising:
- a container or box (1) provided with means for accessing the inside and means for opening and closing (3) the container or box (1),
- a smartphone (12) that may send and receive information to and from the container or box (1),
at least one biometric sensor (6), wherein
- the opening and closing means (3) are based on the use of the at least one biometric sensor (6) for reading fingerprints, comprising additionally
- an electromechanical lock (4),
- an electronic control (5) for opening and closing,
- signalling means of the operations carried out, which may be light (7) or acoustic means such as a buzzer (8),
- an opening and closing detection sensor (9),
- wireless communication means (10), to be able to connect with the smartphone (12) via Bluetooth for example,
- power supply means,
- an electronic registering mechanism of opening and alarm events,
- a mechanical mechanism that enables automatic locking by merely closing the box without requiring any additional action.
- the smartphone enables the registration and de-registration of users to be controlled and remote opening and closing to be carried out, **characterised in that**
- The container or box (1) comprises cooling and control means, carried out via thermoelectric cooling that uses the Peltier effect and the smartphone that configures the control of the inside temperature of the box.

2. The system for transporting and housing cosmetics, according to claim 1, **characterised in that** the container or box (1) is a rigid case that is accessed through a lid (2).

3. The system for transporting and housing cosmetics, according to claim 1, **characterised in that** the container or box (1) is a flexible bag that is accessed via a zip (13).

4. The system for transporting and housing cosmetics, according to claim 1, **characterised in that** the electromechanical means (4) for opening and closing are motorised.

5. The system for transporting and housing cosmetics, according to claim 1, **characterised in that** the power supply means are a number of batteries (11).

## Patentansprüche

1. System zum Transportieren und Aufnehmen von Kosmetika, umfassend:
- einen Behälter oder Kasten (1), der mit Mitteln zum Zugriff auf das Innere und Mitteln zum Öffnen und Schließen (3) des Behälters oder Kastens (1) bereitgestellt ist,
- ein Smartphone (12), das Informationen an und von dem Behälter oder Kasten (1) senden und empfangen kann,
mindestens einen biometrischen Sensor (6), wobei
- die Öffnungs- und Schließmittel (3) auf der Verwendung des mindestens einen biometrischen Sensors (6) zum Lesen von Fingerabdrücken basieren, die zusätzlich Folgendes umfassen:
- ein elektromechanisches Schloss (4),
- eine elektronische Steuerung (5) zum Öffnen und Schließen,
- Signalmittel der ausgeführten Arbeitsgänge, die Licht (7) oder akustische Mittel, wie ein Summer (8) sein können,
- einen Öffnungs- und Schließerkennungssensor (9),
- drahtlose Kommunikationsmittel (10), um z. B. eine Verbindung mit dem Smartphone (12) über Bluetooth herstellen zu können,
- Stromversorgungsmittel,
- einen elektronischen Registrierungsmechanismus für Öffnungs-und Alarmereignisse,
- einen mechanischen Mechanismus, der eine automatische Verriegelung allein durch Schließen des Kastens ermöglicht, ohne dass zusätzliche Maßnahmen erforderlich sind.
- das Smartphone es ermöglicht, die An- und Abmeldung von Nutzern zu steuern und das Öffnen und Schließen aus der Ferne durchzuführen,
**dadurch gekennzeichnet, dass**
- der Behälter oder Kasten (1) Kühl- und Steuermittel, die mittels den Peltier-Effekt nutzender thermoelektrischer Kühlung durchgeführt werden, und das Smartphone, das die Steuerung der Innentemperatur des Kastens konfiguriert, umfasst.

2. System zum Transportieren und Aufnehmen von Kosmetika nach Anspruch 1, **dadurch gekennzeichnet, dass** der Behälter oder Kasten (1) ein starres Gehäuse ist, das durch einen Deckel (2) zugänglich ist.

3. System zum Transportieren und Aufnehmen von Kosmetika nach Anspruch 1, **dadurch gekennzeichnet, dass** der Behälter oder Kasten (1) ein flexibler Beutel ist, der durch einen Reißverschluss (13) zugänglich ist.

4. System zum Transportieren und Aufnehmen von Kosmetika nach Anspruch 1, **dadurch gekennzeichnet, dass** die elektromechanischen Mittel (4) zum Öffnen und Schließen motorisiert sind.

5. System zum Transportieren und Aufnehmen von Kosmetika nach Anspruch 1, **dadurch gekennzeichnet, dass** die Stromversorgungsmittel mehrere Batterien (11) sind.

## Revendications

1. Système pour le transport et le logement de cosmétiques comprenant :
- un conteneur ou boîtier (1) pourvu de moyens pour accéder à l'intérieur et de moyens pour ouvrir et fermer (3) le conteneur ou boîtier (1),
- un smartphone (12) qui peut envoyer et recevoir des informations à et du conteneur ou boîtier (1),
au moins un capteur biométrique (6), dans lequel
- les moyens d'ouverture et de fermeture (3) consistent en l'utilisation du au moins un capteur biométrique (6) pour lire les empreintes digitales, comprenant en outre
- un verrou électromécanique (4),
- une commande électronique (5) pour l'ouverture et la fermeture,
- des moyens de signalement des opérations réalisées, qui peuvent être des moyens lumineux (7) ou acoustiques comme une alarme (8),
- un capteur de détection d'ouverture et de fermeture (9),
- des moyens de communication sans fil (10), pour pouvoir se connecter au smartphone (12) par Bluetooth par exemple,
- des moyens d'alimentation électrique,
- un mécanisme d'enregistrement électronique des évènements d'ouverture et d'alarme,
- un mécanisme mécanique qui permet un verrouillage automatique en fermant simplement le boîtier sans que cela ne nécessite aucune action supplémentaire.
- le smartphone permet de contrôler l'enregistrement et le désenregistrement des utilisateurs et de réaliser une ouverture et une fermeture à distance,
**caractérisé en ce que**
- Le conteneur ou boîtier (1) comprend des moyens de refroidissement et de commande, réalisés par refroidissement thermoélectrique qui utilise l'effet Peltier et le smartphone qui configure le contrôle de la température intérieure du boîtier.

2. Système pour le transport et le logement des cosmétiques, selon la revendication 1, **caractérisé en ce que** le conteneur ou boîtier (1) est un étui rigide qui est accédé par un couvercle (2).

3. Système pour le transport et le logement des cosmétiques, selon la revendication 1, **caractérisé en ce que** le conteneur ou boîtier (1) est un sac souple qui est accédé par une fermeture éclair (13).

4. Système pour le transport et le logement des cosmétiques, selon la revendication 1, **caractérisé en ce que** les moyens électromécaniques (4) pour l'ouverture et la fermeture sont motorisés.

5. Système pour le transport et le logement des cosmétiques, selon la revendication 1, **caractérisé en ce que** les moyens d'alimentation électrique sont quelques batteries (11).
